# EUROPEAN PATENT APPLICATION

(11) **EP 1 291 049 A2**
(43) Date of publication of application: **12.03.2003**
(21) Application number: 02255570.0
(22) Date of filing: 08.08.2002
(51) Int. Cl.: A63F 13/10

(54) **Fighting game program**

(30) Priority: 21.08.2001 JP 2001250835
(71) Applicant: Konami Corporation, Chiyoda-ku, Tokyo 100-6330 (JP)
(72) Inventor: Yabe, Makoto, c/o Konami Computer Ent. Japan Inc, Tokyo (JP); Hirata, Hidehiro, c/o Konami Comp. Ent. Japan Inc, Tokyo (JP); Kubo, Yuji, c/o Konami Computer Ent. Japan Inc, Tokyo (JP); Yamamura, Kazuki c/o Konami Comp. Ent. Japan Inc, Tokyo (JP); Okamura, Noriaki c/o Konami Comp. Ent. Japan Inc, Tokyo (JP)
(74) Representative: Haley, Stephen

(57) **Abstract**

In a fighting game in which a plurality of characters controlled by players are displayed on a display to fight with each other, a computer program provides a first mode in which at least three characters are displayed on a first screen to fight with each other, and a second mode in which two characters are displayed on a second screen to perform a man-to-man battle. A current mode of the fighting game is switched between the first mode and the second mode.

## Description

The present invention relates to a fighting game program to be played by use of game machines, and more particularly, to a fighting game in which characters operated by players are displayed and fight each other.

In relation to a related-art fighting game, a plurality of players link their portable game machines together by use of communication cables. The players control characters by way of control sections of their game machines so as to fight each other. In such a fighting game, a plurality of intermixed characters fight each other on a battle screen.

By means of operation, the player selects an assault method for his/her character which is to have a fight. When one character has assaulted and hit another character, to thereby inflict damage on the other character, a level representing physical strength is added to the winning character's physical strength gauge. Simultaneously, a level representing physical strength is reduced from the physical strength gauge of the losing character. The majority of games proceed in this way, and a player wins the game when the level of the enemies' physical strength is reduced to zero.

As mentioned above, in relation to a fighting game, there is continuously displayed a battle scene in which a plurality of intermixed characters fight each other, and progress in the game is associated with few changes in the scene, thus rendering execution of the game monotonous.

Moreover, combat actions of a character to be performed by the player are limited to selection of the assault method. Thus, limitations are imposed on means for reflecting the player's intention in a game.

A rule that a win is awarded to a player whose character has reduced the level of physical strength gauge of enemy characters to zero through accumulated assaults on the enemies in a battle lacks the feeling of gaining of a victory over enemies in a battle; that is, the feeling of "decisive settlement," thereby providing the player with insufficient feeling of victory and pleasure.

Accordingly, there may arise a case where a player is prone to lose interest in the related-art fighting game, because of its monotonous development of scenes, limitations on reflection of the player's intention in a game, and insufficient pleasure in victory. Thus, the related-art fighting game involves problems in terms of the nature of interest in a game or the entertainment value thereof.

It is therefore an object of the present invention to provide a fighting game program which involves full changes in development of game scenes, increased control of a player's combat action, and the feeling of satisfying victory in a battle.

In order to achieve the above object, according to the present invention, there is provided a computer program for a fighting game in which a plurality of characters controlled by players are displayed on a display to fight with each other, the program comprising the processing of:
providing a first mode in which at least three characters are displayed on a first screen to fight with each other;
providing a second mode in which two characters are displayed on a second screen to perform a man-to-man battle; and
switching a current mode of the fighting game between the first mode and the second mode.

In this configuration, the players can enjoy a game having numerous changes in development of the scene.

Preferably, a transition between the first screen and the second screen is continuously performed in the switching process.

Preferably, the computer program further comprises the processing of: detecting an attack input operation performed by one player who is associated with a first character and intends to deliver an attack to a second character; and judging whether a distance between the first character and the second character in the first screen is a first distance or less. The attack input operation is made valid only when it is judged the distance between the first character and the second character is the first distance or less.

Here, it is preferable that the computer program further comprises the processing of displaying gages each associated with one character to indicate a level acquired by the one character.

Further, it is preferable that the gage is represented by a graph having an area corresponding to the acquired level.

Further, it is preferable that the computer program further comprises the processing of incrementing a gage for the first character when the attack input operation is made valid, while decrementing a gage for the second character.

Here, it is preferable that the computer program further comprises the processing of:
providing at least one decisive attack item which is competitively possessed by the characters;
judging whether a first character possesses the decisive attack item;
judging whether a gage for the first character reaches a predetermined level; and
enabling the first character to deliver a decisive attack to a second character so that the first character wins against the second character.

Further, it is preferable that the computer program further comprises the processing of displaying the decisive attack item on the first screen.

Since the player can lead the character to a win in fight by use of a "decisive attack," the player has a strong feeling of victory and can be intoxicated with a feeling of triumph.

Preferably, the computer program further comprises the processing of detecting a mode shift input operation performed by one player who is associated with a first character and intends to conduct a man-to-man battle with a second character. A transition from the first mode to the second mode is performed by the mode shift input operation.

Here, it is preferable that the computer program further comprises the processing of judging whether a distance between the first character and the second character in the first screen is a second distance of less. The mode shift input operation is made valid to perform the transition, only when it is judged the distance between the first character and the second character is the second distance or less.

Preferably, the computer program further comprises the processing of: displaying, on the second screen, a series of operation instructions to be followed by the players associated with the first character and the second character, as the man-to-man battle; and judging which player first follows the operation instructions.

Here, it is preferable that the computer program further comprises the processing of: displaying gages respectively associated with the first character and the second character to indicate a level acquired by the respective character; and incrementing a gage for a character won the man-to-man battle, while decrementing a gage for a character lost the man-to-man battle.

If a player desires to fight with a plurality of enemies, a character assigned to the player can have a fight in the first mode. In contrast, if the player desires to have hot competition with a specific enemy at any cost, the player shifts the mode from the first mode to the second mode by performing the mode shift input operation, wherein the character has a fight with the specific enemy. Hence, a variety of fighting modes are available, and the player's intention can be sufficiently reflected on a game.

When a player is awarded a win in the second mode, a character assigned to the player acquires an item for enhancing attacking prowess. As a result of the character activating the item, at least attacking prowess or physical strength of the character is enhanced. Thus, the attacking prowess of the character is diversified, and the player can enjoy development of a game involving rich turbulence.

Preferably, the computer program further comprises the processing of: detecting a mode return input operation performed by one player who intends to cancel the second mode; and detecting whether a first time period has elapsed since the second mode was established. A transition from the second mode to the first mode is performed at least one of when the mode return input operation is detected and when it is detected the first time period has elapsed.

Here, it is preferable that the computer program further comprises the processing of judging whether a distance between a third character and either the first character or the second character in the first screen is a third distance or less. The mode return operation is provided as an interruption attack input operation performed by one player who is associated with a first character and intends to deliver an attack to a second character to cancel the second mode. The interruption attack input operation is made valid only when it is judged the distance between the third character and either the first character or the second character is the third distance or less.

Further, it is preferable that the computer program further comprises the processing of displaying an image which defend the first character and the second character from the interruption attack operation.

Preferably, the computer program further comprises the processing of giving an item for enhancing attack prowess of a character who won the man-to-man battle.

Here, it is preferable that the computer program further comprises the processing of: detecting an item activation input operation performed by a player who intends to activate the item; and enhancing the attack prowess of a character associated with the player who activated the item.

Further, it is preferable that the item is plurally stockable by each character.

Preferably, the second screen is displayed only on display of players who participate the man-to-man battle, while the first screen is displayed on display of another player.

Preferably, at least one of the characters is a computer-controlled character.

According to the present invention, there is also provided a computer-readable recording medium in which the above computer program is recorded.

Consequently, the fighting game program according to the invention provides numerous changes in development of the game scene, and the player's arbitrary control of battle actions is enhanced. Further, there can be fulfilled a fighting game program which enables players to experience a sufficient feeling of triumph.

The above objects and advantages of the present invention will become more apparent by describing in detail preferred exemplary embodiments thereof with reference to the accompanying drawings, wherein:
Fig. 1 is a plan view showing a game machine for activating a fighting game executed by a program of the invention;
Fig. 2A is a plan view showing a connection cable for interconnecting game machines shown in Fig. 1;
Fig. 2B is a plan view showing a plurality of game machines interconnected by use of the connection cables;
Fig. 3 is a diagram showing the configuration of a control section of the game machine shown in Fig. 1;
Fig. 4 is a view showing a game screen for a battle royal mode in the fighting game;
Fig. 5 is a view showing a game screen for a man-to-man attack on a battle royal mode in the fighting game;
Fig. 6 is a view showing a game screen, in which a man-to-man attack has successfully hit an enemy and caused an effect in the fighting game;
Fig. 7 is a view showing a game screen on a man-to-man battle mode in the fighting game;
Fig. 8 is a view showing a game screen of the man-to-man battle mode which is to be viewed by players who have not participated in the man-to-man battle;
Fig. 9 is a view showing a game screen which appears at the time of activation of a "decisive attack" in the battle royal mode;
Fig. 10 is a view showing a game screen which appears at the time of activation of a "decisive spell" in the battle royal mode;
Fig. 11 is a flowchart showing system processing to be performed when a character in the fighting game delivers an attack;
Fig. 12 is a flowchart showing processing for shifting a mode in the fighting game to a decisive attack mode;
Fig. 13 is a flowchart showing system processing pertaining to the decisive attack mode;
Fig. 14 is a flowchart showing system processing pertaining to the man-to-man battle mode;
Fig. 15A is a flowchart showing system processing to be performed to enable the "decisive spell" to be used;
Fig. 15B is a flowchart showing system processing to be performed when the "decisive spell" is used;
Fig. 16 is a flowchart showing processing procedures of a fighting game; and
Fig. 17 is a flowchart showing processing procedures of the man-to-man battle mode.

Preferred embodiments of the invention will be described hereinbelow in detail with reference to the accompanying drawings.

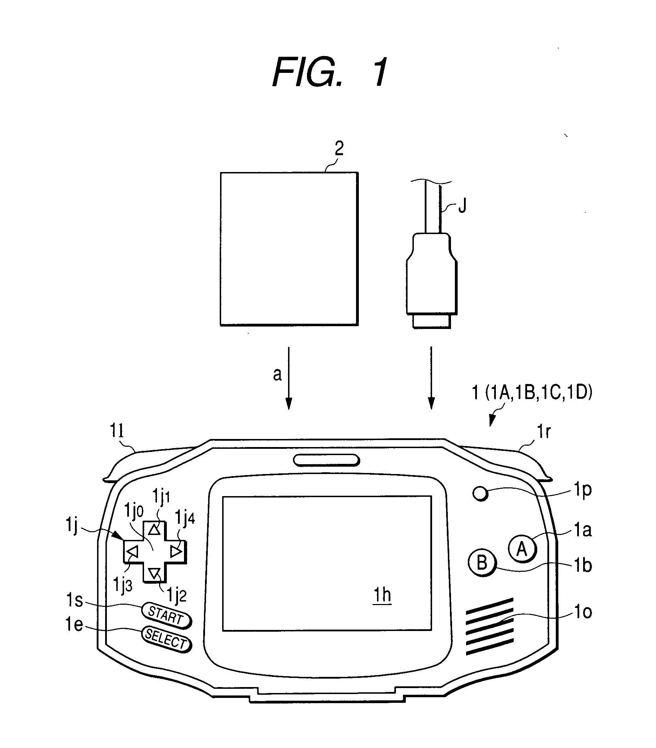

In a fighting game according to an embodiment of the invention, a plurality of players control actions of characters assigned to them (hereinafter simply called "characters") by operating their game machines 1 (1A, 1B, 1C, and 1D) shown in Fig. 1. In a battle royal mode (a first mode), all characters participate in a battle and fight each other. When a certain character has successfully delivered on an enemy character a man-to-man attack (an attack for shifting the game to a man-to-man battle mode, hereinafter called a "mode shift attack"), the game shifts to the man-to-man battle mode (a second mode), in which the character has a man-to-man battle with the enemy character.

In the man-to-man battle mode, if a character other than the characters involved in the man-to-man battle makes an attack on one of the involved characters (an attack for releasing the characters from the second mode, hereinafter called a "mode return attack"), the game shifts from the man-to-man battle mode back to the battle royal mode.

A character that has continued fighting against other characters while shifting between the battle royal mode and the man-to-man battle mode and has satisfied certain requirements is allowed to use a "decisive attack." The character scores a win, by successfully defeating an enemy character in the battle royal mode through use of the "decisive attack."

The battle game program is recorded in a custom-designed cartridge 2 with backup memory, which is a recording medium shown in Fig. 1.

Each of the players inserts the cartridge 2 into a cartridge port (not shown) of a game machine 1 in the direction designated by arrow "a."

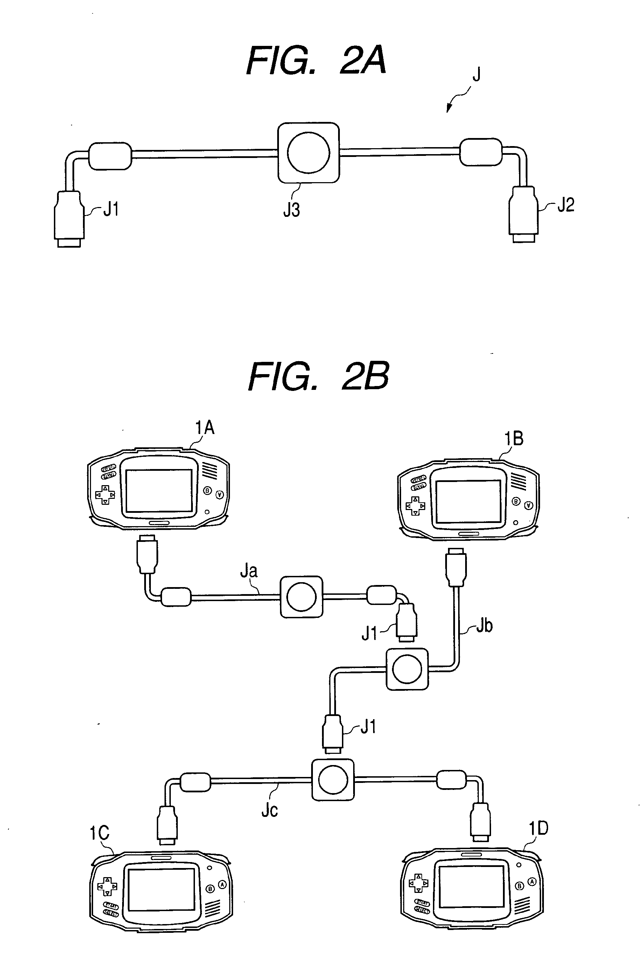

When four players play a battle game, the game is played by interconnecting a game machine 1A to be operated by a player 1, a game machine 1B to be operated by a player 2, a game machine 1C to be operated by a player 3, and a game machine 1 D to be operated by a player 4 by way of a connection cable J shown in Fig. 2A; that is, three connection cables Ja, Jb, and Jc shown in Fig. 2B.

As shown in Fig: 1, the game machine 1 is equipped with a display 1 h constituted of liquid crystal for displaying a game image; a speaker 1o; a start button 1s to be pressed for initiating a game; a select button 1e to be pressed for selecting a menu; a cursor key 1j whose arrow sections 1j1, 1j2, 1j3, 1j4 oriented in predetermined directions and a neutral section 1j0 are to be pressed for selecting an item or for moving a cursor; an A (determination) button 1a to be pressed for determining a selected item; a B (cancel) button 1b to be pressed for canceling the thus-determined item; and a power lamp 1p, such as a green light-emitting diode, which displays turning on/off of power in the form of blinks. An R button 1 r to be assigned an arbitrary use is provided at a right portion on the upper side surface, and an L button 11 to be assigned an arbitrary use is provided at a left portion on the upper side surface. Formed in a left portion on the upper side surface is a cartridge port into which the custom-designed cartridge 2 is to be inserted. Formed in a right portion on the upper side surface is a jack section (not shown) into which the connection cable J is to be inserted.

The connection cable J is for interlinking a plurality of game machines 1 to be used for playing a fighting game. As shown in Fig. 2A, a small plug J1 is provided at one end of the cable, and a large plug J2 is provided at the other end of the cable. A junction box J3 is provided at the center of the cable.

The small plug J1 and the large plug J2 are configured to be inserted into the jack sections of the game machine 1. The small plug J1 is configured so as to be fitted to the junction box J3, thereby interlinking a plurality of the junction cables J.

As mentioned above, when four players play a fighting game through use of the game machines 1A, 1B, 1C, and 1D, the game machines 1A, 1B, 1C, and 1D are linked together by way of three connection cables Ja, Jb, and Jc in the manner shown in Fig. 2B.

When three players play a fighting game through use of the three game machines 1B, 1C, and 1D, the game machines 1B, 1C, and 1D are interlinked by way of two connection cables Jb, Jc.

When two players play a fighting game through use of the two game machines 1 C and 1 D, the game machines 1 C and 1 D are interlinked by way of one connection cable Jc.

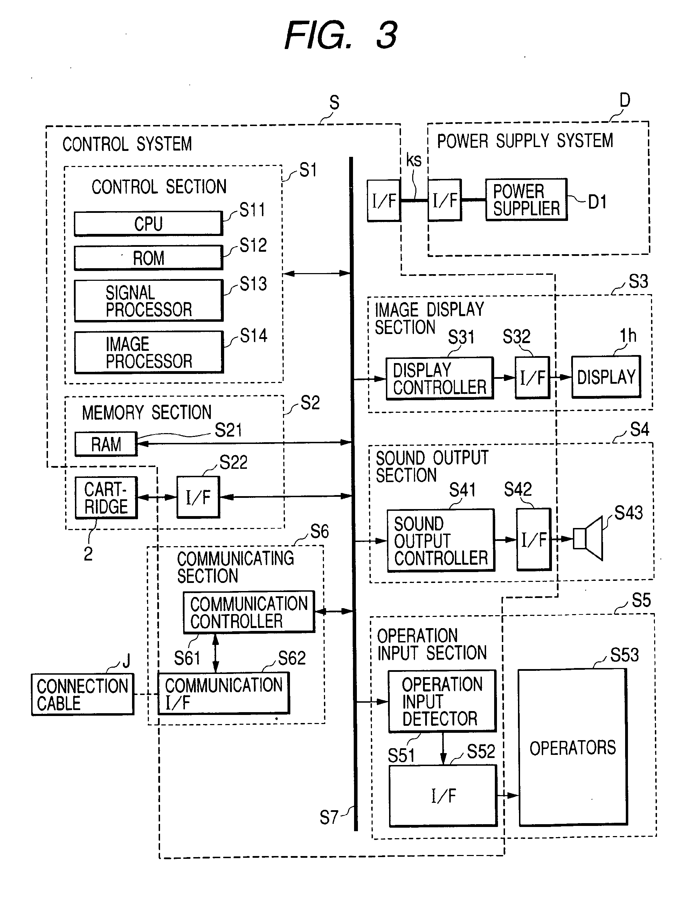

Next, the configuration of a control section which is housed in the game machine 1 (i.e.,in each of the game machines 1A, 1B, 1C, and 1D) and is to be used for controlling progress in fighting game will be described with reference to Fig. 3.

The control section is constructed so as to comprise a power supply system D for supplying a voltage, and a control system S for controlling the entire fighting game through use of a voltage supplied from the power supply system D.

The power supply system D is constructed to comprise a power supplier D1. The power supplier D1 converts the voltage of external commercial power, supplied from a battery or by way of an external power supply adapter, into a power source complying with a predetermined specification, such as a source voltage used in the control system. The power supplier D1 supplies a voltage to the control system S by way of a power supply line ks.

Each of the power supply system D and the control system S is equipped with an interface (I/F), and a voltage is supplied by way of the interfaces (I/F) and the power supply line ks.

The power supply system D is connected to a power ON/OFF switch (not shown) of the game machine 1. Supply/interruption of a voltage to the control system is effected by switching an ON/OFF switch between an ON position and an OFF position.

The control system S controls the game machine 1. The control system S is connected, by way of a system bus S7, to a control section S1 which performs various processing operations for controlling other constituents to be described later and for executing a fighting game; a memory section S2 which stores a fighting game program such as fighting game data and-fighting game work data being processed; an image display section S3 for subjecting a game image being played to display processing; a sound output section S4 for outputting sounds, such as a sound effect or a BGM, corresponding to the game being played; an operation input section S5 which subjects, to input processing, various operation information items operated when the player plays a game; and a communicating section S6 for performing various communication processing operations related to communication with other game machines.

The control section S1 is equipped with a CPU (central processing unit) S11, a ROM (read only memory) S12, a signal processor S13, and an image processor S14.

For instance, a 32-bit CPU is used as the CPU (S11). The CPU serves as a core of the control section of the game machine 1 and exchanges a control signal and data signals with other constituent control sections by way of the system bus S7, thereby controlling the entirety of the game machine 1 in a centralized manner.

The CPU (S11) produces tasks for rendering or sound output from commands, as required, on the basis of a fighting game program and input operations to be performed by the player by way of the control section of the game machine 1, thus controlling progress in the fighting game.

The operating system (OS) of the game machine 1 is stored in the ROM (S12).

The signal processor S13 computes positions of characters and the position of a light source in two-dimensional or three-dimensional space in accordance with a command to be executed by the CPU (S11), thereby producing sound data.

The image processor S14 writes image data to be rendered within a display area (i.e., a frame buffer) of a RAM (random access memory) 21 to be described later, on the basis of a result of computation performed by the signal processor S13.

The memory section S2 is equipped with RAM (S21) and an I/F (S22). The memory section S2 is further provided with the custom-designed cartridge 2 to be attached to the game machine 1 by the player.

A part or all of the game program read from the cartridge 2 is loaded into the RAM (S21) at the time of execution of the fighting game.

The cartridge 2 has internal ROM, and various information items required for executing the fighting game; e.g., a fighting game program such as various data sets pertaining to a fighting game, are recorded in the ROM.

Specifically, stored in the ROM are a program code of a fighting game, game sounds, conversation to be exchanged between characters, images constituting prepared game spaces, images representing locations within the game spaces, and images representing various characters.

Here, the cartridge 2 is constituted of, e.g., a so-called ROM cassette made of a plastic case having ROM contained therein, an optical disk (e.g., an MO), or a floppy disk (e.g., an FD).

The cartridge 2 attached to the game machine 1 is electrically connected to the system bus S7, by way of the interface I/F (S22) which manages an interface function related to exchange of a control signal and a data signal output from the CPU (S11) and those output from the RAM (S21).

The image display section S3 is equipped with a display controller S31, an I/F (S32), and the display 1h.

Here, at the time of execution of the game the image display controller S31 controllably displays game images of the fighting game on the display 1 h in accordance with progress in the game.

The display 1h is electrically connected to the display controller S31 by way of the interface I/F (S32), which manages an interface function related to exchange of a control signal and image data.

The sound output section S4 is equipped with a sound output controller S41, an I/F (842), and a speaker S43.

The sound output controller S41 controllably outputs a sound effect or sound, such as a BGM, provided by the speaker S43 in accordance with progress in the game.

The speaker S43 has a built-in amplifier for amplifying various sounds on the basis of various sound data sets in accordance with an output control operation of the sound output controller S41.

The speaker S43 is electrically connected to the sound output controller S41 by way of the interface I/F (S42), which manages an interface function related to exchange of a control signal and sound data.

The operation input section S5 is equipped with an operation input detector S51; an I/F (S52); and operators S53 such as the cursor key 1j, the start button 1s, the select button 1e, the A button 1a, the B button 1b, the R button 1r, and the L button 1I, all of which belong to the game machine 1.

The operation input detector S51 detects an input operation performed by the player by way of the operators S53; that is, pressing of a key or button. The thus-detected operation is converted into recognizable operation input information, and the information is output to the CPU (S11) by way of the system bus S7.

The operators S53 corresponds to the various keys and buttons described previously. The player inputs various instructions by way of an input operation in accordance with progress in the game.

The communicating section S6 is equipped with a communication controller S61 and a communication interface I/F (S62).

When the player plays a fighting game, the communication controller S61 performs communication processing operation related to exchange of fighting game data with the other game machines.

The communication interface I/F (S62) manages interface related to exchange of various data sets pertaining to fighting game data between the game machine 1 and the other game machines while the connection cable J is inserted into the game machine 1.

There will now be described the overview of the fighting game processing to be performed by the control section of the game machine 1 having the foregoing configuration.

In relation to a fighting game, when the player turns on a power ON/OFF switch at the outset, a voltage is supplied from the power supply system D to the control system S.

In the control system S, the CPU (S11) performs start-up and initialization processing operations by the OS recorded in the ROM (S12).

On the basis of the OS recorded on the ROM (S12), the CPU (S11) reads a fighting game program, such as image data, sound data, and a program code, from the cartridge 2. A part or all of the thus-read game program is loaded into the RAM (S21).

From then on, the CPU (S11) controls progress in the fighting game on the basis of the fighting game program and the input operation performed by way of the operators S53, by executing the fighting game program stored in the RAM (S21).

The CPU (S11) executes a command of a fighting game program on the basis of operation input information sent from the operation input detector S51 in accordance with the operation performed by the player by way of the operators S53, thus producing tasks for rendering image or sound output, as required.

The signal processor S13 computes positions of characters and the position of the light source in a two-dimensional or three-dimensional space on the basis of the tasks, thus producing sound data.

The image processor S14 writes image data to be rendered within a display area (i.e., a frame buffer) of RAM (random access memory) S21 to be described later, on the basis of the computation result.

Subsequently, in the image display section S3, the display controller S31 converts the image data written into the RAM (S21) into an analog video signal for each predetermined cycle, thereby displaying a game image on the screen of the display 1h.

In the sound output section S4, the sound output controller S41 converts sound data output from the signal processor S14 into an analog sound signal. Upon receipt of the analog sound signal by way of the I/F (S42), the speaker S43 amplifies the signal to a predetermined level by use of an amplifier, thus producing a sound effect or sounds, such as a BGM.

Although the previously-described fighting game system exemplifies a case where the invention is applied to the game machine 1 of portable type, the fighting game system can be applied also to a home game machine.

When the game system is applied to a home game machine, the display 1h and the speaker S43 shown in Fig. 1 are replaced with the screen and speaker of a TV set. Hence, the display and the speaker are separate from a main unit of the game machine.

If the fighting game system is applied to game machines for commercial use; that is, game machines installed in an amusement arcade, all the constituent elements shown in Fig. 3 are assembled into a single piece and embodied as being housed in a housing of a commercial game machine.

In this case, the cartridge 2 is not removable but is embodied by attaching, to the game machine, a hard disk unit or ROM in which a fighting game program, such as various data sets pertaining to a predetermined fighting game, are stored beforehand.

In a case where the fighting game system is embodied by use of a personal computer or a work station, the display 1h and the speaker S43 are replaced with the computer's speaker and display. Further, the cartridge 2 is replaced with a CD-ROM or a floppy disk. Further, a constituent element, such as the image processor S14, is replaced with hardware mounted on a printed board of the computer, such as an IC chip.

In a case where the fighting game system is embodied as the computer, a fighting game program to be stored in the cartridge 2, such as various fighting game data sets, may be utilized, by downloading the program by way of a communication delivery service; for example, the Internet, and storing the thus-downloaded program in a hard disk drive of the computer.

Next will be described the entire configuration of the fighting game to be executed by execution of a fighting game program.

Here, the players 1, 2, 3, and 4 play a fighting game by operating the game machines 1A, 1B, 1C, and 1D. A character to be operated by the player 1 is taken as a character C1; a character to be operated by the player 2 is taken as a character C2; a character to be operated by the player 3 is taken as a character C3; and a character to be operated by the player 4 is taken as a character C4.

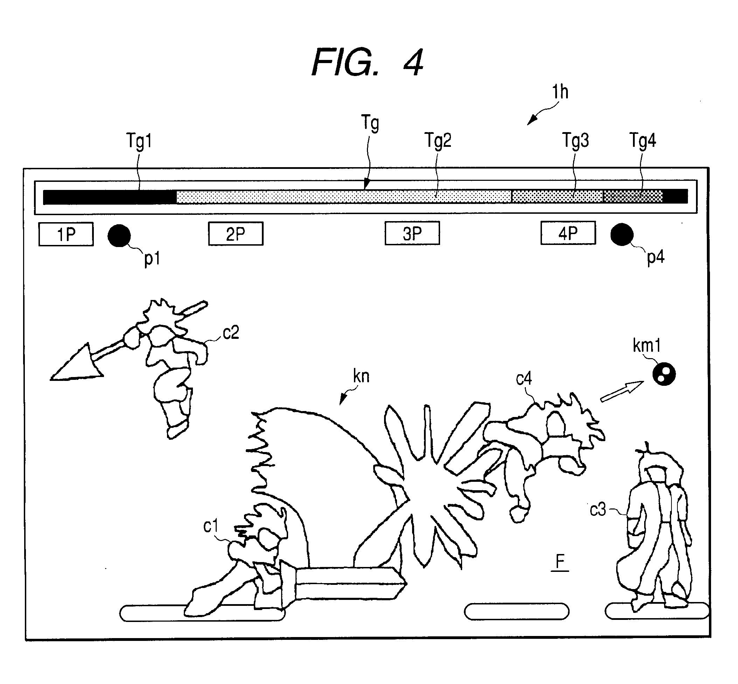

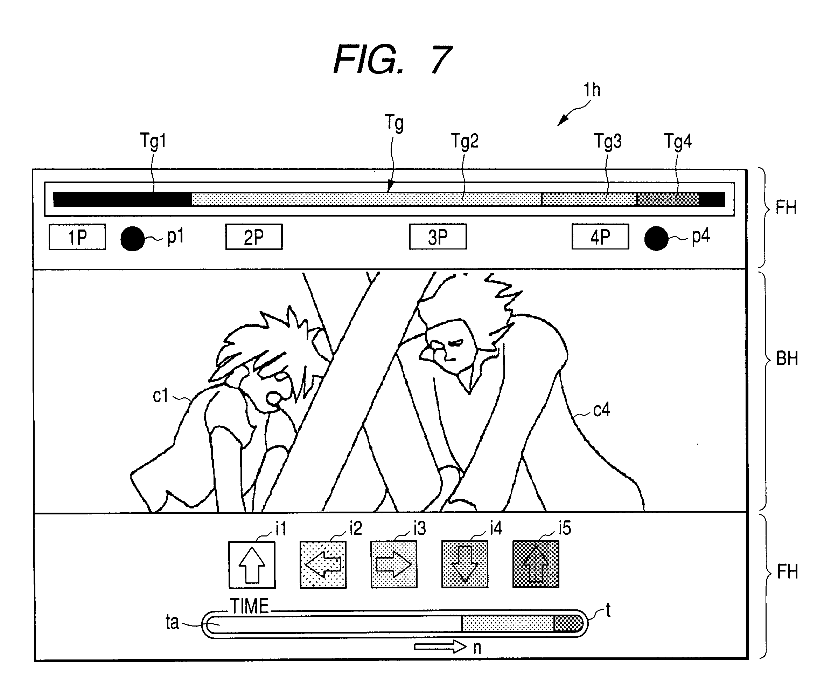

The fighting game has a battle royal mode (see Fig. 4) and a man-to-man battle mode (see Fig. 7). In the battle royal mode, players participating in the fighting game operate their game machines 1, thereby controlling actions of their characters, and all the characters fight each other. In the man-to-man battle mode, only two characters participate in a fight.

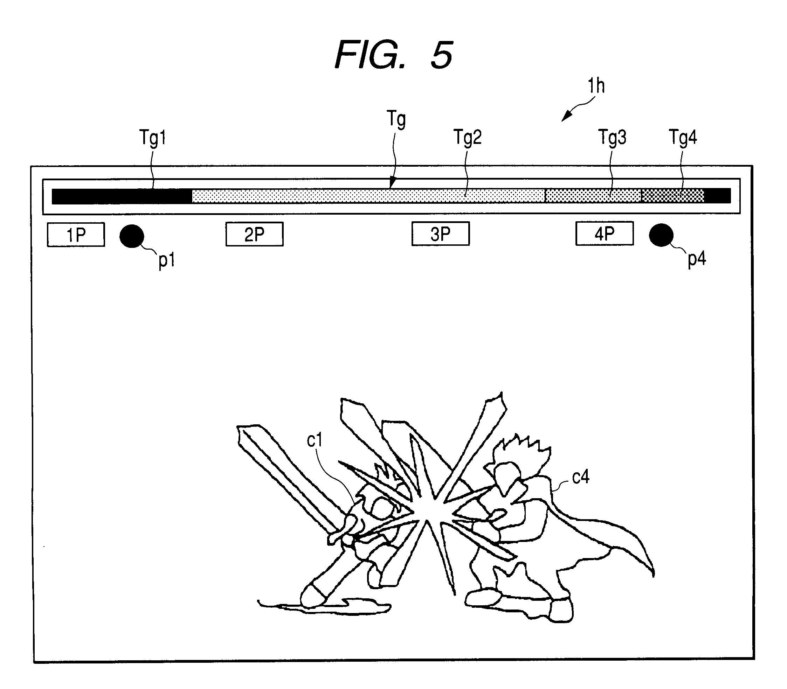

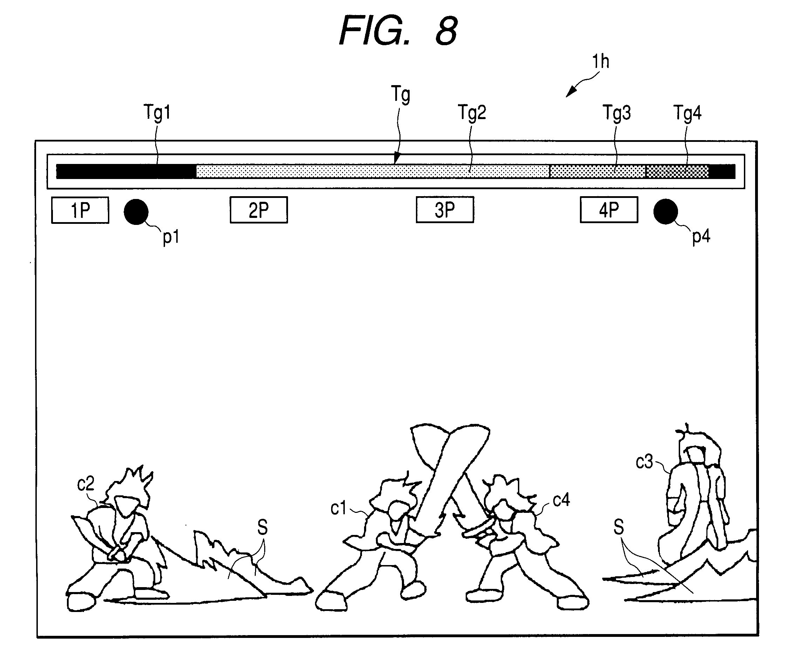

When a game is started, the game enters a battle royal mode shown in Fig. 4, and all characters fight each other. When a certain character has attempted to deliver a man-to-man attack on an enemy character and has successfully delivered the attack (see Fig. 5), the game shifts to a man-to-man battle mode (see Figs. 7 and 8), in which the attacking character has a man-to-man battle with the attacked character.

In relation to a screen display in a man-to-man battle mode, two players 1, 4 whose characters are fighting each other in a man-to-man battle mode are provided with a man-to-man battle screen shown in Fig. 7. The characters C2, C3 other than the characters C1, C4 that are fighting each other in a man-to-man battle mode cannot be viewed on the display.

In contrast, the players 2, 3 other than the players 1, 4 whose characters are now fighting each other in a man-to-man battle mode are provided with a screen shown in Fig. 8, thus enabling viewing of all the characters C1, C2, C3, and C4.

If, in a man-to-man battle mode, the players 2, 3 who are operating the characters 2, 3 other than the characters that are fighting in a man-to-man battle mode deliver an attack on the characters C1, C4 which are fighting each other in a man-to-man battle mode on the screen shown in Fig. 8, by performing a man-to-man battle cancel attack operation (i.e., an operation for inputting a second mode cancel instruction), the game shifts from the man-to-man battle mode (see Figs. 7 and 8) back to the battle royal mode (see Fig. 4). Thus, the characters fight each other while shifting between the battle royal mode and the man-to-man battle mode, as required.

If one character attains a win over the other in the man-to-man battle mode, the winning character can use a "decisive spell" (an item for improving attacking prowess).

The fighting game has a basic rule such that a player is allowed to use a "decisive attack," by acquiring a predetermined level of strength on a tension gauge (i.e., a point gauge to be described later) and key items (decisive attack acquisition items to be described later), which correspond to accumulated results gained by the player's character by use of a decisive spell through fights performed in the battle royal mode or man-to-man battle mode and that a win is awarded to the player when his/her character has successfully delivered a "decisive attack" to an enemy character in the battle royal mode.

The battle royal mode corresponds to a fighting action mode basic to the fighting game. In this mode, all the characters C1, C2, C3, and C4 mixedly fight each other by delivering various attacks or mortal techniques 1, 2, and 3 through input operations (i.e., attack input operations) performed by use of the cursor key 1j or other buttons.

An increase in a tension gauge of a character or possession of a key item is absolutely necessary for the character to display a "decisive attack" by attacking an enemy character. In the battle royal mode, offensive and defensive battles are fought for acquiring a key item; for example, delivery of a specific attack on an enemy character or knocking down of an enemy character for causing the enemy character to drop a key item; delivery of an attack on an enemy character so as to disturb the enemy character in acquiring the thus-dropped key item; or delivery of an attack on the key item such that the key item is blown away from the enemy character.

The attacks comprise the following attacks; namely,
a normal attack to be delivered by pressing the B button 1b;
a consecutive attack which is performed by continuously pressing the B button 1b after a normal attack has been delivered on an enemy character;
a horizontal massive attack, in which power is applied in a horizontal direction, by simultaneously pressing the left arrow section 1j3 or the right arrow section 1j4 of the cursor key 1j and the B button 1b;
an upward massive attack, in which an upward attack is delivered, by simultaneously pressing the upward arrow section 1j1 of the cursor key 1j and the B button 1b, to thereby knock down the character attacked in the air so as to cause the character to drop a key item;
a downward massive attack in which a downward attack is delivered by simultaneously pressing the down arrow section 1j2 of the cursor key 1j and the B button 1b, to thereby knock down the character so as to cause the character to drop a key item, regardless of whether the character is in the air or on the ground;
a horizontal jump attack in which a character is caused to jump by pressing the A button 1a and delivers an attack in a horizontal direction by simultaneously pressing the left arrow section 1j3 or the right arrow section j4 of the cursor key 1j and the B button 1b while the character is jumping;
an upward jump attack in which a character is caused to jump by pressing the A button 1a and delivers an attack in an upward direction by simultaneously pressing the upward arrow section 1j1 of the cursor key 1j and the B button 1b while the character is jumping;
a downward jump attack in which a character is caused to jump by pressing the A button 1a and delivers a downward attack by pressing the downward arrow section 1j2 of the cursor key 1j and the B button 1b while the character is jumping; and
a man-to-man battle shift attack in which an attack is delivered by simultaneously pressing the A button 1a and the B button 1 b and in which the game shifts to a man-to-man battle mode when the attack has resulted in a hit.

The mortal technique 1 corresponds to an attack (including firearms) which is effected by pressing any one of the left arrow section 1j3, the right arrow section 1j4, and the neutral section 1j0 of the cursor key 1j in conjunction with the R button 1r, and basically scores a decision in a horizontal direction.

The mortal technique 2 corresponds to an attack which basically effects upward movement by pressing the upward arrow section 1j1 of the cursor key 1j in conjunction with the R button 1r, and scores a decision in an upward direction.

The mortal technique 3 corresponds to an attack which basically scores a decision in a downward direction or within a short range by pressing the upward arrow section 1j1 of the cursor key 1j in conjunction with the R button 1r.

There will now be described in detail a tension gauge, key items, and modes, which are employed in the fighting game.

A single tension gauge Tg is shared between all the characters and is displayed in an upper position on the game screen in the form of a horizontal bar graph of predetermined length (a score graph). Tension gauges (score gauges) Tg1, Tg2, Tg3, and Tg4 assigned to the characters 1, 2, 3, and 4 are displayed in a color-coded manner.

Needless to say, the tension gauge Tg can be displayed not only in the form of a horizontal bar graph of predetermined length such as that mentioned previously, but also in the form of a graph of another geometry, such as a circle graph.

Alternatively, tension gauges of the characters 1, 2, 3, and 4 may be displayed separately in arbitrary geometry in place of the single tension gauge Tg so that the tension gauges Tg1, Tg2, Tg3, and Tg4 may be ascertained quantitatively.

The tension gauge Tg is uniformly assigned to all the characters participating in a fighting game at the beginning thereof. Depending on fight results of all the characters, the tension gauges are incremented or decremented, thus displaying fight records of all the characters and a "build-up of drama in the scene."

As shown in Figs. 4 through 8, when a player has attempted to deliver an attack on an enemy character in either the battle royal mode or man-to-man battle mode and has successfully delivered the attack, a level is added to the tension gauge Tg assigned to the player's character, thereby increasing the share of tension gauge of that character in the tension gauge Tg. In contrast, the share of tension gauge of the attacked character is decremented, and the share of tension gauge of the attacked character in the tension gauge Tg is decreased. Hence, the character that has the largest share in the tension gauge Tg is obviously determined to be the main character in the fight.

The tension gauge Tg also serves as a life gauge assigned to an individual fighting character. For instance, if a certain character does not have any gauge in the tension gauge Tg; namely, if a certain character has no share in the tension gauge Tg, the character is knocked down or has lost consciousness.

After lapse of a given period of time, the character that has been knocked down or lost consciousness is given a small share in the tension gauge Tg and can fight again.

The tension gauge Tg is used in "decisive attack" determination processing as a requirement for performing a "decisive attack" during the course of game processing. Thus, the tension gauge Tg serves as a core parameter in the fighting game system.

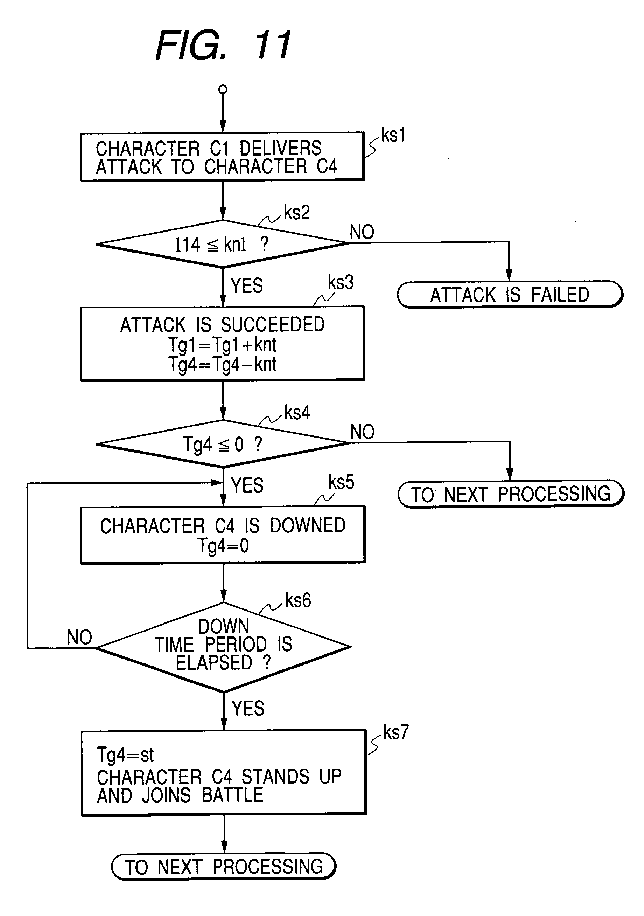

Attack processing in which the tension gauge Tg is incremented or decremented will now be described with reference to Fig. 11; that is, a flowchart showing game system processing to be performed at the time of an attack.

As shown in Fig. 4, it is, for example, assumed that a character (to which an attack operation is inputted) C1 has attempted to deliver an attack kn on a character (an attacked enemy character) C4 (step ks1).

A determination is made as to whether or not a distance 114 between the characters C1 and C4 falls within an effective attack range kn1 (step ks2), and the attack becomes void when the distance 114 is greater than the effective attack range kn1.

In contrast, when the distance 114 is equal to or less than the effective attack range kn1, the attack kn becomes effective. A score knt gained by the attack kn is added to the tension gauge Tg1 of the character C1 (Tg1 = Tg1 + knt), and a score equal to the score knt is subtracted from the tension gauge Tg4 of the character C4 (i.e., Tg4 = Tg4 - knt), and the results are displayed in the tension gauge Tg (step ks3).

Subsequently, a determination is made as to whether or not the tension gauge Tg4 of the character C4 has decreased to 0 (step ks4) or less. If the tension gauge Tg4 is 0 or less, the character C4 is knocked down, and the tension gauge Tg4 is taken as 0 (step ks5).

A down time period dt is measured with a timer (step ks6). When the down time period dt has elapsed, a recovery point ct is added to the tension gauge tg4 (Tg4 = ct), and the tension gauge tg4 again appears in the tension gauge Tg. The character C4 then stands up and becomes able to fight again (step ks7).

The attack game system processing in which the tension gauge Tg is incremented or decremented is carried out as described above. Needless to say, system processing identical to that performed for the character C1 is performed for the other characters C2, C3, and C4.

The key items are required for effecting a "decisive attack." Possession of a key item is set as one requirement for effecting a "decisive attack."

As shown in Figs. 4 through 9, a character possessing a key item km1 and a character possessing a key item km2 (not shown) are indicated, by indication of any of a 1P lamp image representing the character C1, a 2P lamp image representing the character C2, a 3P lamp image representing the character C3, and a 4P lamp image representing the character C4.

In the case shown in Figs. 4 through 9, the 1P lamp image p1 and the 4P lamp image p4 are illuminated, and hence the characters 1 and 4 possess the key item km1 or km2.

In the present game, a win is awarded to a player when a character assigned to the player has successfully performed a "decisive attack." Possession of a key item is a requirement for gaining a win in a game.

As mentioned previously, the requirements for effecting a "decisive attack" are set as possession of a key item and reservation of a predetermined level of tension gauge or higher.

Impediments to enemy characters possessing the key items km1, km2 are effective tactics.

The characters of the players fight each other in a battle royal mode for acquiring a predetermined number of key items. For example, as shown in Fig. 4, if the character C1 has attempted to deliver an attack on the character C4 possessing the key item km1 and has successfully delivered the attack, the character C4 drops the key item km1 when being knocked down. Specifically, the key item km1 appears from the inside of and to the outside of the character C4, falls into a field F, and is left there.

An attack for hindering the character C4 from picking up the thus-dropped key item km1 is another effective strategy. When attacks have been successfully delivered onto the key items km1, km2, they are arranged so as to be blown away in the directions of attack. Hence, another possible strategy is to intentionally blow away the key items km1, km2 away from enemy characters.

A decisive attack mode in which the "decisive attack" is used for gaining a win or loss in fight is arranged in the following manner.

As mentioned above, the character that has satisfied the two requirements which enable use of a "decisive attack" can use the "decisive attack" in a battle royal mode. The player is informed that the "decisive attack" can be used by blinking his/her character.

When the player uses the "decisive attack," the player presses the start button 1s of the game machine 1 in the battle royal mode shown in Fig. 4, whereupon the game shifts to a decisive attack mode. At this time, even when another player is present in, e.g., a man-to-man battle mode, the game can be forcefully shifted to a decisive attack mode.

Here, input operation of the start button 1s is set so as to become effective only when the character that has satisfied the requirement takes no action. For instance, a condition is set by an If-statement in a program such that no input can be accepted by way of the start button 1s while the character is being subjected to some kind of operation such as the character experiencing damage, the character jumping, or the character delivering an attack.

If the requirement is satisfied and a decisive attack is performed, a screen is switched, whereby the player who attempts to perform a decisive attack and the other player have a match involving repeated pressing of buttons.

All the buttons provided on the game machine 1 are set to be usable as objects of repeated pressing.

When the player who attempts to perform a decisive attack and the other player repeatedly press the buttons provided on their game machines 1, the respective numbers of button-pressing actions are counted and the resultant counts are compared with each other. The tension gauge of the player who has performed a greater number of button-pressing actions is increased, whereas the tension gauge of the player who has performed a less number of button-pressing actions is decreased.

Here, when a great difference exists between the players in terms of the number of button-pressing actions, the tension gauge Tg increases or decreases significantly. If the difference is small, the tension gauge Tg increases or decreases to a less extent.

For instance, when a time limit on a decisive attack mode is set to five seconds, there are acquired data pertaining to the number of per-second button-pressing actions, whereby the tension gauge is increased or decreased.

If a plurality of "other players" are involved, a mean number of button-pressing actions performed by the other players is computed; that is, a total number of button-pressing actions performed by the other players is divided by the number of players. The thus-computed mean number of button-pressing actions is compared with the number of button-pressing actions performed by the player who attempts to perform a decisive attack, to thereby perform a determination processing operation.

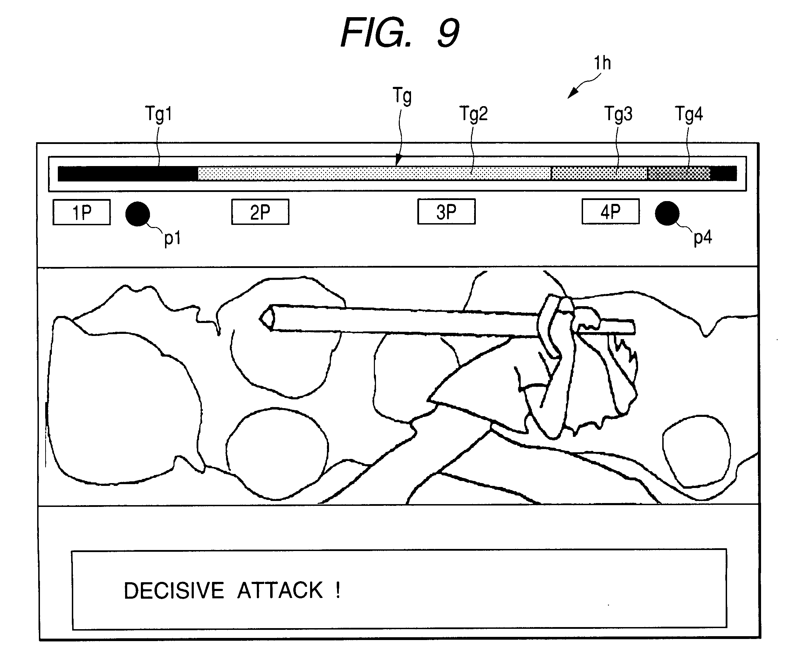

Thus, the player who attempts to perform a decisive attack and the other players have a fight for repeatedly pressing buttons. When the player who attempts to perform a decisive attack can have reserved, for a given period of time, a tension gauge sufficient for performing a decisive attack, the "decisive attack!" shown in Fig. 9 is performed, and a win is awarded to the player who has performed the decisive attack.

As shown in Fig. 9, the "decisive attack" is displayed on the screen in an enlarged manner by scaled-up demonstration of characters. Subsequently, the game shifts to a winning demonstration (not shown).

In contrast, if the player who attempts to perform a decisive attack has failed to maintain the tension gauge sufficient for performing a "decisive attack," there is performed an operation for disabling activation of a "decisive attack," thereby significantly decreasing the tension gauge of the player who attempts to perform a decisive attack.

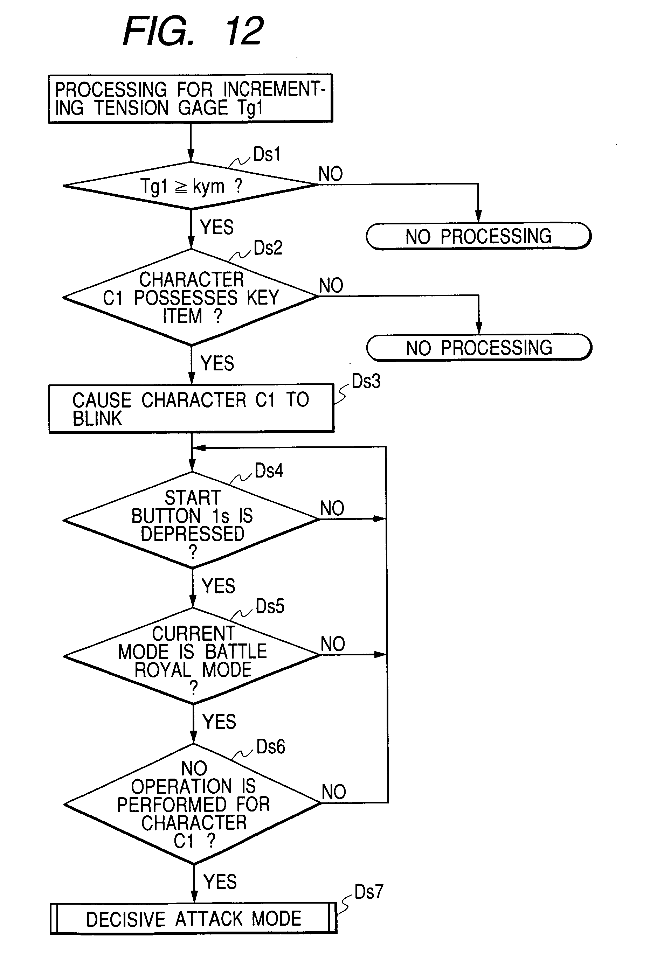

The game system processing pertaining to the "decisive attack" will now be described, with reference to Fig. 12 showing a flowchart for shifting a current mode to a decisive attack mode and by employing the character C1 as an example.

Needless to say, processing identical with that performed for the character C1 is performed for the other characters C2, C3, and C4.

Upon performance of an operation for incrementing a level to the tension gauge Tg1 of the character 1, a determination is made as to whether or not the tension gauge has achieved a decisive attack gauge value kym which enables use of the "decisive attack" (step Ds1). If the tension gauge has achieved the decisive attack gauge value kym, a determination is made as to whether or not the character C1 possesses the key item (step Ds2).

If the character C1 possesses the key item, the character C1 is caused to blink (step Ds3).

When the player has pressed the start button 1s for performing the "decisive attack" upon seeing blinking of the character C1 (step Ds4), a determination is made as to whether or not the current mode is a battle royal mode (step Ds5).

If the current mode is not a battle royal mode, pressing of the start button 1s is taken as an invalid operation.

If the current mode is a battle royal mode, a check is made as to whether or not operation of the character C1 has been performed (step Ds6). If operation of the character C1 is being performed, pressing of the start button 1s is taken as an invalid operation.

If operation of the character C1 is not performed, the current mode shifts to a decisive attack mode (step Ds7).

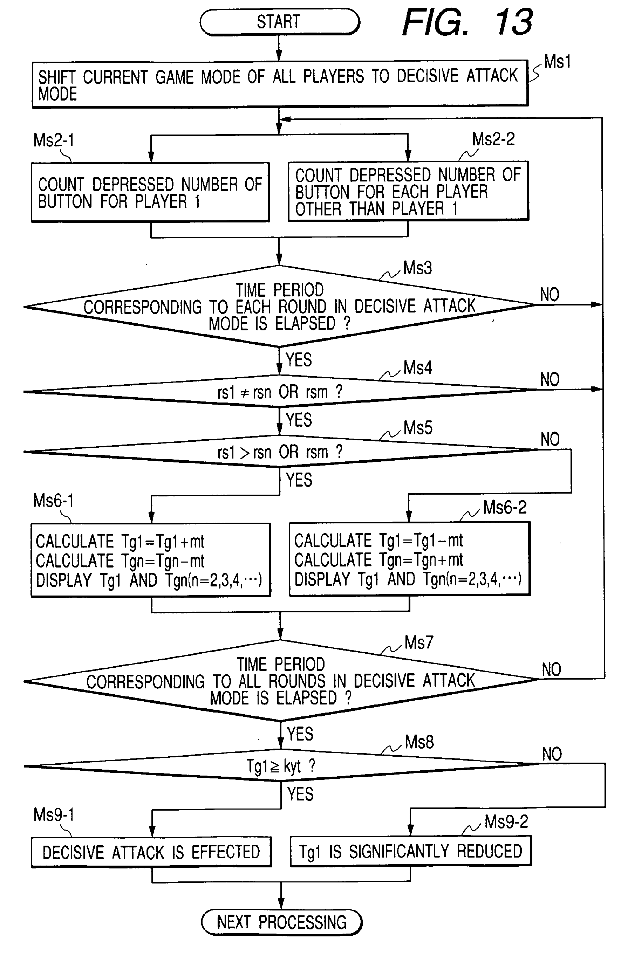

Subsequently, processing pertaining to the decisive attack mode will now be described with reference to Fig. 13, which shows a decisive attack mode flowchart.

If pressing of the start button 1s of the character C1 has become valid, the game modes of all the players are shifted to a decisive attack mode (step Ms1).

Next, the player 1 who attempts to perform a "decisive attack" presses the button of the game machine 1 A repeatedly, and the button-pressing actions are counted (step Ms2-1).

Simultaneously, the other players repeatedly press the buttons of their game machines 1, and the button-pressing actions are counted (step Ms2-2).

If the decisive attack mode consists of, e.g., a few rounds, a timer is used to measure whether or not a time limit on one round has elapsed (step Ms3).

If a time limit on one round of the decisive attack mode has elapsed, a total number rs1 of button-pressing actions repeatedly performed by the player 1 who attempts to perform a "decisive attack" is compared with a total number rsn of button-pressing actions performed by the other players through use of their game machines 1.

If the other players have performed button-pressing actions rs2, rs3, and rs4, the mean value rsm of the button-pressing actions (i.e., rsm = [(rs2 + rs3 + rs4) / 3] is compared with the total number rs1 of button-pressing actions performed by the player 1 (steps Ms4 and Ms5).

If the number of button-pressing actions rs1 performed by the player 1 is equal to the number of button-pressing actions rsn or rsm performed by the other players, no computation is performed (No in step Ms4).

If the number rs1 of button-pressing actions performed by the player 1 is greater than the number rsn or rsm of button-pressing actions performed by the other players, a numerical value mt equal to the difference is added to the tension gauge Tg1 (Tg1 = Tg1 + mt). Conversely, a numerical value mt corresponding to the difference is subtracted from the tension gauge Tgn of the other player or from the tension gauges Tg1, Tg2, and Tg3 of the other players, and the thus-subtracted tension gauges appear in the tension gauge Tg (step Ms6-1).

If the number rs1 of button-pressing actions performed by the player 1 is less than the number rsn or rsm of button-pressing actions performed by the other players, the numerical value mt corresponding to the difference is subtracted from the tension gauge Tg1 of the player 1 (Tg1 = Tg1 - mt). Conversely, the numerical value mt is added to the tension gauge Tgn of the other player or to the tension gauges Tg1, Tg2, and Tg3 of the other players, and the resultant gauges appear in the tension gauge Tg (step Ms6-2).

Processing pertaining to (step Ms2-1) and that pertaining to (step Ms2-2) are repeated until the time limit on the decisive attack mode elapses (step Ms7).

A determination is made as to whether or not the player 1 who attempts to perform a "decisive attack" has been able to reserve his/her tension gauge Tg1 at a decisive attack effective value kyt required for performing a "decisive attack" (step Ms8).

If the player 1 has failed to reserve the tension gauge Tg1 at or higher than the decisive attack effective value kyt, the tension gauge Tg1 of the player 1 who attempts to perform a "decisive attack" is significantly reduced (step Ms9-2).

If the player 1 has successfully reserved the tension gauge Tg1 at or higher than the decisive attack effective value kyt, a "decisive attack" such as that shown in Fig. 9 is activated (step Ms9-1).

Up to this point, the game system processing pertaining to a "decisive attack" has been described.

Here, the decisive attack value kym and the decisive attack effective value kyt may be set so as to become equal to each other or so as to differ from each other.

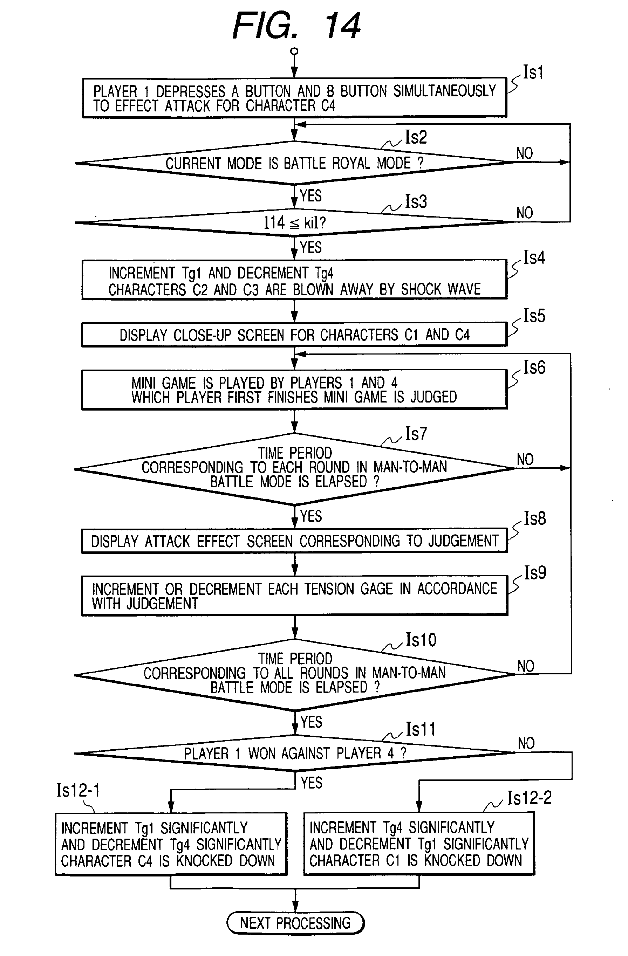

Next, the processing in a man-to-man battle mode will be described with reference to Fig. 14.

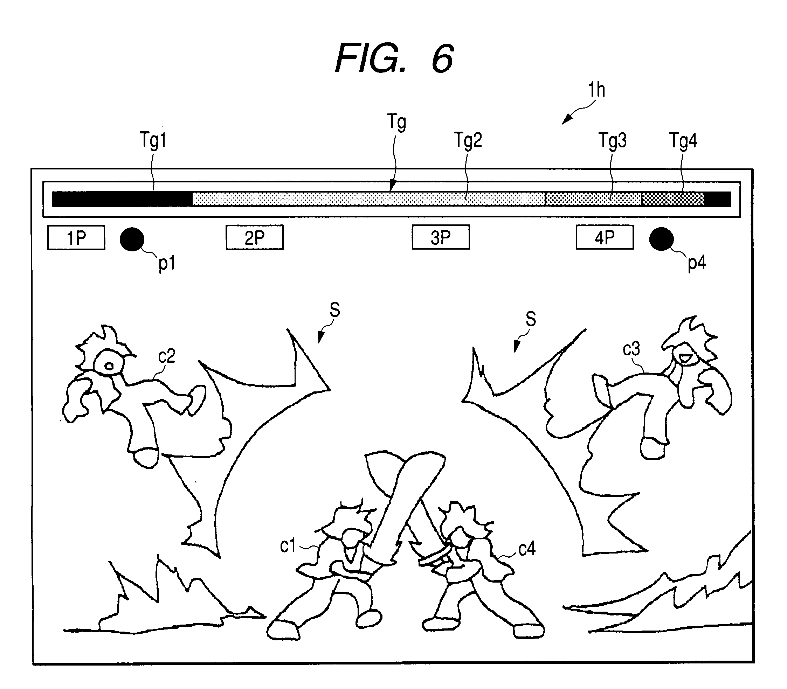

As shown in Fig. 5, for example, the player 1 who operates the character C1 presses the A button 1a and the B button 1b of the game machine 1A simultaneously (a second mode shift input operation), thereby delivering a man-to-man attack (a mode shift attack). If the attack has hit the character C4, shock waves "s" arise in the manner as shown in Fig. 6, and the characters C2, C3 are blown away by the shock waves "s." Then, the current mode is shifted to the man-to-man battle mode.

When the player 1 has pressed the A button 1a and the B button 1b simultaneously for delivering a man-to-man attack on the character C4 from the character C1 (step Is1), a determination is made as to whether or not the current mode is a battle royal mode (step Is2). Also, another determination is made as to whether or not a distance between the characters C1 and C4 falls within an effective attack range kil (step Is3). If the distance falls within the effective attack range kil, the man-to-man attack becomes effective, thereby generating the shock waves "s." There is displayed a game screen (see Fig. 6) showing that the characters C2, C3 are blown away by the shock waves "s" (step Is4), and the current mode shifts to a man-to-man battle mode.

When the current mode has shifted to the man-to-man battle mode, a close-up screen of hot competition between the characters C1 and C4 shown in Fig. 7 is displayed (step Is5).

A time gauge "t" representing a time limit on a man-to-man battle mode appears at a position below the man-to-man battle mode screen (see Fig. 7). Five turn arrows (man-to-man battle operation instructions) i1, i2, i3, i4, i5 appear at positions above the time gauge "t" for informing the player of an input operation of the cursor key 1j.

The man-to-man battle mode screen (shown in Fig. 7) is not wholly displayed. First, a man-to-man battle screen frame FH is displayed. Next, a close-up display BH of characters having a fight is displayed. Finally, the turn arrows i1, i2, i3, i4, and i5 are displayed.

The man-to-man battle mode is a fight consisting of a mini-game played by the characters C1, C4 with a time limit of, e.g., seven to eight seconds. As shown in Fig. 7, an illuminating section ta in the time gauge "t" of the TIME display extends in the direction designated by arrow "n" with lapse of time. After lapse of the time limit, the illuminating section ta reaches the entire area of the time gauge "t," thus terminating the man-to-man battle mode.

In the man-to-man battle mode, the player 1 operating the character C1 presses the arrow sections 1j1, 1j2, 1j3, 1j4 in sequence of i1, i2, i3, i4, i5 from the left so as to match the arrows indicated by the turn arrows i1, i2, i3, i4, i5 within a time limit imposed on one round; for example, two to three seconds, wherein a plurality of rounds are to be effected within the time limit on the man-to-man battle. At the same time, the player 4 operating the character C4 presses the arrow sections 1j1, 1j2, 1j3, 1j4 of the cursor key 1j of the game machine 1 D. A win is awarded to a player who has pressed the cursor key 1j most quickly in agreement with the turn arrows i1, i2, i3, i4, i5. For each of the turn arrows i1, i2, i3, i4, and i5, a determination is made as to whether the player 1 or 4 has been quicker in correctly pressing the cursor key 1j (input operation competition processing) (step Is6).

The brightest turn arrow i1 in Fig. 7 shows an arrow for which either the player 1 or 4 has already performed an input operation. Dark turn arrows i3, i4, and i5 show arrows for which neither the player 1 nor 4 has yet performed input operations. The second brightest turn arrow i2 designates an arrow for which the player 1 or 4 should now perform an input operation.

When the time limit on one round has been reached (step Is7), the close-up displays BH of the characters C1, C4 fighting each other are reversed, and an attack effect (not shown) is also displayed (step Is8). Subsequently, a result of determination is displayed in the form of increment/decrement of the tension gauge Tg (step Is9). Within the time limit imposed on the man-to-man battle mode, there appears a screen of hot competition (see Fig. 7) in which the turn arrows i1, i2, i3, i4, i5 showing different directions are displayed, and the next round is started.

The time gauge "t" shows an elapsed time without reference to progress in the round. At a point in time when an illuminating area has occupied the entire time gauge "t" or when a time limit on the man-to-man battle mode (a time limit on the second mode) has elapsed (step Is10), the man-to-man battle mode is terminated. A win is awarded to the player 1 or 4 who has gained a larger number of gains in the rounds as a result of determination (step Is11).

The tension gauge of the winner in the man-to-man battle mode (a winning character in the man-to-man battle); that is, the tension gauge Tg1 or Tg4, is increased significantly. In contrast, the tension gauge Tg1 or Tg4 of the loser character in the man-to-man battle mode (a loser character in a man-to-man battle) is greatly diminished and the loser character is forcefully knocked down (steps 12-1 and Is12-2).

The man-to-man mode game screen (Figs. 7 and 8) is switched, and the battle royal mode game screen (see Fig. 4) appears.

When three or more players are playing the man-to-man mode game, the remaining players can hinder the players who are having a man-to-man battle. If the hindrance has been successful, the current mode can be shifted to a free-fight.

For example, as mentioned previously, the player 2 operating the character C2 and the player 3 operating the character C3, neither character participating in the man-to-man battle in the man-to-man battle mode, view the game screen shown in Fig. 8.

In this case, we assume that the player 2 or 3 has operated his/her character C2 or C3 (a second mode cancel instruction input operation character) in order to deliver an attack kn onto either one of the characters C1 and C4, who are waging a man-to-man battle, by operating a man-to-man battle cancel attack operation while avoiding the shock waves "s" (the second mode cancel defense display) shown in Fig. 8. If the attack kn has hit the character, the tension gauge Tg of the attacking character C2 or the tension gauge Tg of the attacking character C3 is increased, whichever character has delivered the attack kn. In contrast, the tension gauge Tg1 of the attacked character C1 or the tension gauge Tg4 of the attacked character C4 is decreased, whichever character has been attacked. Thus, the man-to-man battle mode shifts to the battle royal mode.

Here, if a distance 121 between the character C2 and the character C1, who is waging a man-to-man battle with the character C4, falls within the effective attack range kn1 (121 ≤ kn1), the attack kn delivered by the character C2 onto the character C1 becomes effective.

When either one of the characters attains a win in the man-to-man battle mode, the winner can use a "decisive spell" once.

Here, the "decisive spell" is an item for enhancing the attacking prowess and physical strength of the characters C1, C2, C3, and C4. For instance, there is available a decisive spell wherein a sword is imparted with an explosion effect; more specifically, when an attack is delivered with a sword, an explosion effect is added to the attack, and the attacker's attacking prowess is enhanced for a given period of time. There is also available a decisive spell wherein the movement speed and attacking speed of the sword are enhanced for a given period of time.

Here, two types of decisive spells are set for each of the characters C1, C2, C3, and C4, and the decisive spells differ in the specific words used and in their effects.

The foregoing decisive spells are mere illustrations. Needless to say, other decisive spells or a plurality of types of decisive spells; for example, three types of decisive spells, four types of decisive spells, or other numbers of decisive spells, can be set for each of the characters C1, C2, C3, and C4.

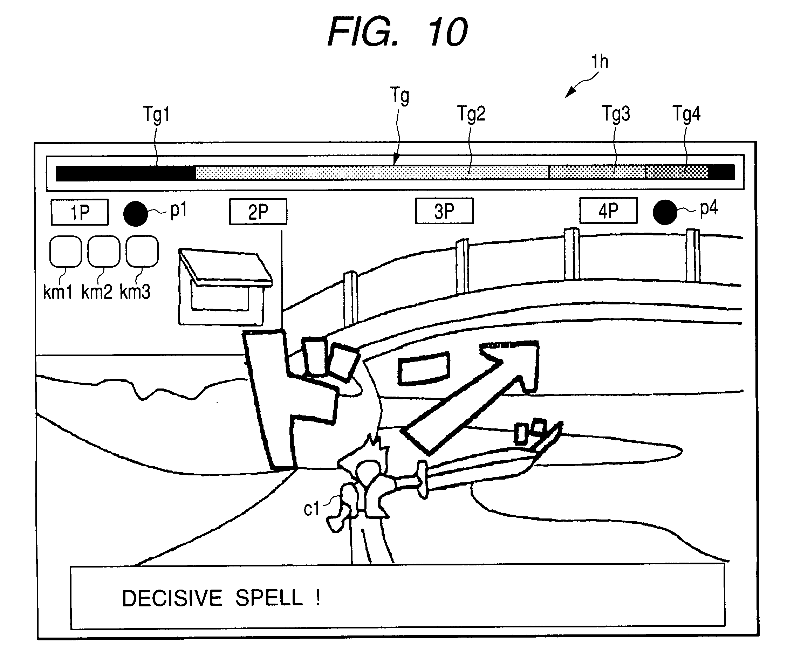

A maximum of three "decisive spells" can be stocked by a character. As shown in Fig. 10, the thus-stocked decisive spells are indicated as decisive spell marks km (km1, km2, and km3) in an upper left position on the game screen of the player who is operating the character possessing the "decisive spells."

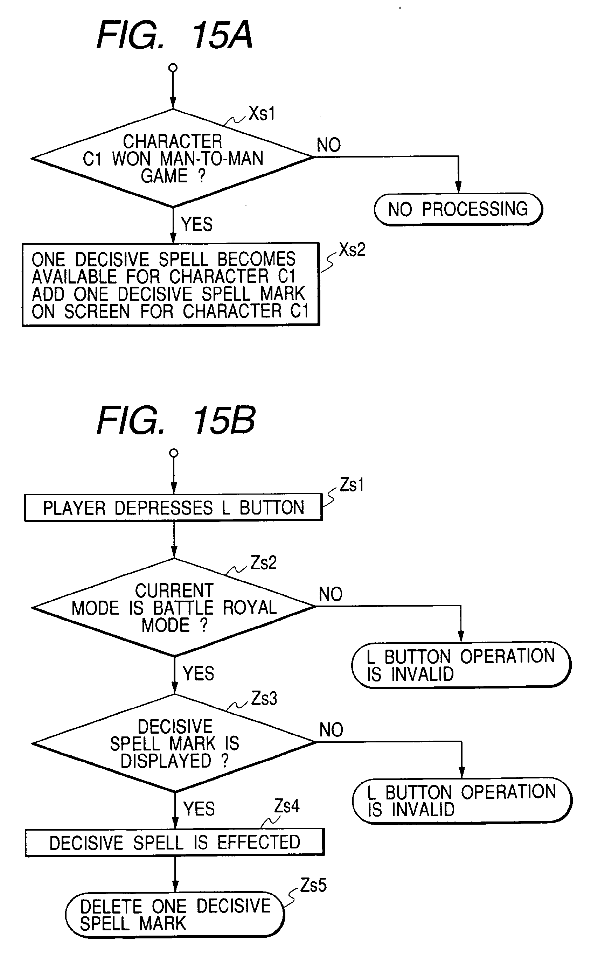

As shown in Fig. 15A, a character can use a "decisive spell" once each time a win is awarded to the character, and one decisive spell mark km is indicated (steps Xs1 and Xs2). Each time the "decisive spell" is used, one decisive spell mark km is consumed.

As shown in Fig. 10, three decisive spell marks km1, km2, and km3 are indicated in an upper left position on the game screen of the game machine 1 of the player who is operating the character C1. Hence, it is understood that three "decisive spells" are available for the character C1.

As shown in Fig. 15B, when a "decisive spell" is used, the player presses the L button 11 of the game machine 1 in the battle royal mode while one or more decisive spell marks km are available (see Fig. 10) (step Zs1).

A check is made as to whether or not the current mode is a battle royal mode (step Zs2), and another check is made as to whether or not decisive spells marks km are indicated (step Zs3). When the current mode is a battle royal mode and the decisive spell marks km are indicated, a "decisive spell" is activated (step Zs4).

As shown in Fig. 10, a "decisive spell" appears in a lower position on the game screen, and the decisive spell mark km disappears from the upper left position on the game screen (step Zs5). Subsequently, the "decisive spell" produces an effect, and the current mode returns to the battle royal mode.

The foregoing explanation has been given under the assumption that two to four players can participate in the fighting game of the foregoing configuration, by interlinking the game machines 1 through use of the connection cables J. However, five or more players can also participate in the game, and no limitations are imposed on the number of players who participate in a game.

The previously-described communication fight played by a plurality of players is called a "fighting mode."

The "fighting mode" can be set to a free-for-all in which all characters fight each other; a 2-to-2 or 3-to-1 team fight as an optional setting; or a fight in which a character automatically controlled by a CPU (a program-controlled character) is caused to participate in a game.

If a character automatically controlled by a CPU is caused to participate in a game, one or more players can play a fighting game.

In the fighting game, in addition to the "fight mode," there are also available a "story mode" in which a player defeats characters controlled by the CPU (S11), and a "gallery mode" in which a player can browse "decisive attacks" and ending graphics.

The "story mode" is basically identical with the "fighting mode" in terms of combat rules. However, the "story mode" is intended for a single player. There are provided a total of seven rounds in which a player selects one character to be automatically controlled by the CPU (S11) and wins and advances to the next round of the match.

The story mode is intended for fighting out all seven rounds, and the player plays a round by selecting one from 12 characters to be automatically controlled by the CPU. Here, the character to be automatically controlled by the CPU is changed at the beginning of every round.

The story mode is arranged such that the sequence of appearance of characters to be automatically controlled by a CPU or a character to appear in the seventh round is changed by the character selected by the player and such that a message is displayed between rounds, whereupon an interval demonstration for explaining a story or contents of ending are changed.

Two or more players can also play a game in the story mode while cooperating with each other, by interlinking the game machines 1 of the players by way of the connection cables J.

Next will be described overall processing procedures of the fighting game.

Processing operations of the fighting game are performed by executing a fighting game program.

As shown in Fig. 2B, the game machines 1A, 1B, 1C, and 1D to be used by the players 1, 2, 3, and 4 are interlinked by way of the connection cables Ja, Jb, and Jc.

All the players 1, 2, 3, and 4 activate power of their game machines 1A, 1B, 1C, and 1D and press the start buttons 1s. Then, game modes "fight mode," "story mode," and "gallery mode" appear on a title screen.

Each of the players moves a cursor through use of the cursor key 1j to thereby select the "fight mode" and presses the A button 1a, thus determining the game mode.

Connection statuses of the connection cables J are ascertained, and there is displayed a screen for ascertaining the number of game machines 1 interlinked by way of the connection cables J.

Here, there is displayed a screen showing that four players participate in a fighting game.

All the players then press the A buttons 1a of the game machines 1A, 1 B, 1C, and 1D, and then the number of players is determined.

Subsequently, the screen shifts to screens for selection of characters to be used by the players, selection of a team, and initiation of a game.

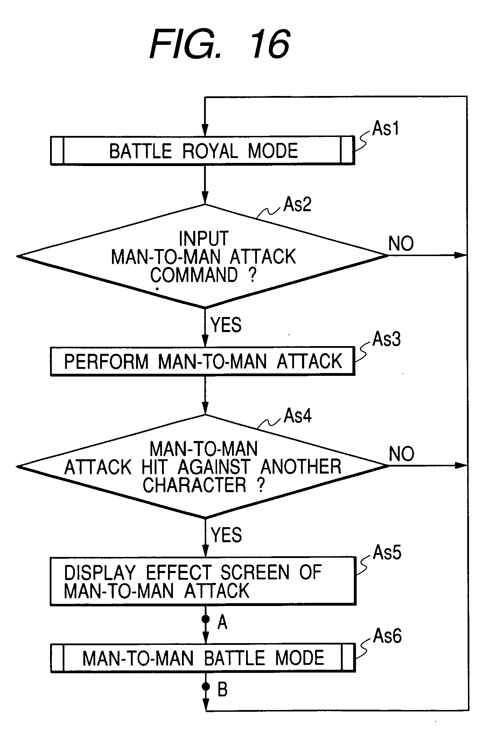

As shown in Fig. 16, which is a flowchart of a fighting game, when the fighting game is initiated, the current mode shifts to a battle royal mode (step As1).

As shown in Fig. 4, in a battle royal mode, the characters C1, C2, C3, and C4 are mixedly present and fight each other freely using attacks, such as a normal attack, a consecutive attack, a horizontal massive attack, an upward massive attack, a downward massive attack, a horizontal jump attack, an upward jump attack, and a downward jump attack, as well as the mortal techniques 1, 2, and 3.

Since a "decisive attack" determines a win or loss in the fighting game, there is ensured a predetermined level of tension gauge Tg, which is a requirement for enabling use of a "decisive attack," and a fight is carried out for acquiring a key item.

In order to ensure a tension gauge Tg required for performing a "decisive attack," the characters C1, C2, C3, and C4 repeatedly deliver attacks on enemy characters. Concurrently, the players move the characters by use of the cursor keys 1j and cause the characters to jump or avoid attacks by enemy characters through use of the A buttons 1 a.

For instance, when the attack delivered by the character C1 has hit the character C4, the tension gauge Tg1 of the character C1 is increased, whereas the tension gauge Tg4 of the character C4 is decreased.

If a certain character has no share in the tension gauge Tg, the character is knocked down or loses consciousness.

The character who has been knocked down or lost consciousness is given a small share in the tension gauge Tg and participates again in the fight.

Offensive and defensive battles are fought so that the characters C1, C2, C3, and C4 acquire key items; for example, delivery of a specific attack on an enemy character or knocking down of an enemy character for causing the enemy character to drop a key item; delivery of an attack on an enemy character so as to disturb the enemy character in acquiring the thus-dropped key item; or delivery of an attack on the key item such that the key item is blown away from the enemy character.

In the battle royal mode, if the player 1 decides to cause the character C1 to enter a decisive fight with the character C4, the player moves the character C1 close to the character C4 by use of the cursor key 1j. Then, the player presses the A button 1a and the B button 1b simultaneously, thus entering a man-to-man battle command (step As2).

As a result, the man-to-man battle command is executed, and, as shown in Fig. 5, the character C1 delivers a man-to-man attack onto the character C4 (step As3).

A determination is made as to whether the man-to-man attack delivered by the character C1 has hit the character C4. If the man-to-man attack has failed, the battle royal mode is continued (step As4).

As shown in Fig. 6, when the man-to-man attack has successfully hit the character C4, the shock waves "s" arise, thereby blowing away the characters C2, C3 other than the characters C1, C4 (step As5).

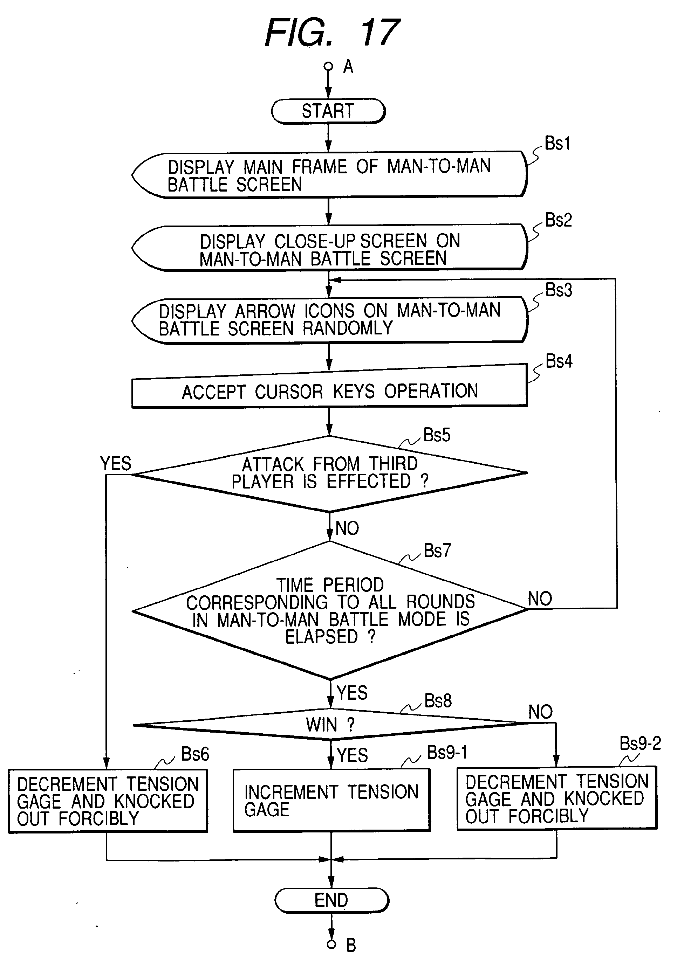

The current mode shifts to a man-to-man battle mode (step As6) shown in Fig. 17.

There is displayed a man-to-man battle screen which does not include the close-up display BH of the fighting characters and the turn arrows i1, i2, i3, i4, and i5 (step Bs1).

The close-up display BH including the characters C1, C4 appears on the above man-to-man battle screen (step Bs2).

The turn arrows i1, i2, i3, i4, and i5, which are random arrow icons, appear on the above man-to-man battle screen (step Bs3).

The player 1 operating the character C1 and the player 4 operating the character C4 quickly press the arrow sections 1j1, 1j2, 1j3, 1j4 of the cursor keys 1j of their game machines 1 in sequence of i1, i2, i3, i4, i5 from the left so as to match the arrows indicated by the turn arrows i1, i2, i3, i4, i5 appearing on the man-to-man battle screen (see Fig. 7), in an attempt to gain a win over the opponent (step Bs4).

The man-to-man battle screen shown in Fig. 7 is displayed as a game screen for each of the players 1, 4 operating the characters C1, C4 that are fighting each other in a man-to-man battle mode. Hence, the players 1, 4 cannot view the remaining characters C2, C3 (step Bs5).

In contrast, the players 2, 3 other than the players 1, 4 whose characters are now fighting each other in a man-to-man battle mode are provided, as a game screen, with a screen shown in Fig. 8, thus enabling viewing of all the characters C1, C2, C3, and C4.

Here, the character C2, C3 may fight each other. Alternatively, they may avoid shock waves and deliver attacks onto the character C1, C4 who are fighting each other in the man-to-man battle mode.

It is assumed that the character C2 or C3 has delivered an attack onto either one of the characters C1 and C4 who are in the man-to-man battle mode.

If the character C2 or C3 has successfully delivered an attack onto one of the characters C1, C4 who are in the man-to-man battle mode, the tension gauge Tg2 of the character C2 or the tension gauge Tg3 of the character C3 is increased. In contrast, the attacked character C1 or C4 is knocked down, and the tension gauge Tg1 of the attacked character C1 or the tension gauge Tg4 of the attacked character C4 is decreased (step Bs6).

Thus, the man-to-man battle mode is terminated and shifts to the battle royal mode.

When neither the character C2 nor the character C3 has delivered an attack onto one of the characters C1 and C4 who are in a man-to-man battle mode or when the attack has ended in failure, processing proceeds to step Bs7.

A determination is made as to whether or not a time limit on the man-to-man battle mode represented by the illuminating section ta in the time gauge "t" of the TIME display has expired.

If the time limit on the man-to-man battle mode has not expired, processing proceeds to step Bs3, wherein the player 1 and 4 fight each other for quick pressing of the arrow sections 1j1, 1j2, 1j3, 1j4 of the cursor key 1j. When a time limit on one round has expired, the close-up display BH of the fighting characters C1, C4 is brought into a dark display. After an attack effect has been displayed, a result of determination appears in the tension gauge Tg. Within the man-to-man battle mode time limit, there is displayed another close-up screen (see Fig. 7) provided with new turn arrows i1, i2, i3, i4, and i5 which are different from the previous round. Then, the next round is started.

When the illuminating section ta has occupied the entire of the time gauge "t" and the time limit on the man-to-man battle mode has expired, a win is determined to be awarded to the player, of the characters C1 and C4, who has gained a greater number of wins in the rounds (step Bs8).

The tension gauge Tg1 of the character C1 or the tension gauge Tg4 of the character C4, whichever is the winner, is increased (step Bs9-1).

The character C1 or C4, whichever is the loser, is forcefully knocked down, and the tension gauge Tg1 or Tg4 of the loser is decreased (step Bs9-2).

When processing pertaining to the steps Bs9-1 and Bs9-2 has been completed, the man-to-man battle mode is terminated, and the mode shifts to the battle royal mode (return to step As1).

The character C1 or C4 that has been awarded a win in the man-to-man battle mode is allowed to use a "decisive spell" once in a battle royal mode. For instance, if the player 1 has been awarded a win, one decisive spell mark km appears in an upper left position on the game screen of the player 1 shown in Fig. 10.

When the character C1 uses the "decisive spell," the player 1 presses the L button 11 of the game machine 1.

As shown in Fig. 10, the "decisive spell" appears in a lower position on the game screen, and the decisive spell mark km disappears from the upper left position on the game screen. Subsequently, the "decisive spell" exhibits an effect, and a current mode returns to the battle royal mode.

The character C1 that has used the "decisive spell" is provided with enhanced attacking prowess and enhanced physical strength.

A character who has satisfied the two requirements for enabling use of a "decisive attack" can use a "decisive attack" in the battle royal mode. The player operating the character is informed that the character can use a "decisive attack," by the character blinking.

When the player uses the "decisive attack," the player presses the start button 1s of the game machine 1, thereby causing the current mode to shift to a decisive attack mode. At this time, even when another player is in, e.g., the man-to-man battle mode, the mode is forcefully shifted to a decisive attack mode.

When the decisive attack command is valid and executed, the screen is changed, and the player who attempts to perform a decisive attack and the other player have a fight for repeatedly pressing buttons.

All the buttons provided on the game machine 1 are set to be usable as objects of repeated pressing. The tension gauge of the player who has performed a greater number of button-pressing actions is increased, whereas the tension gauge of the player who has performed a less number of button-pressing actions is decreased.

If a plurality of "other players" are involved, a mean number of button-pressing actions performed by the other players is computed. The thus-computed mean number of button-pressing actions is compared with the number of button-pressing actions performed by the player who attempts to perform a decisive attack, to thereby perform a determination processing operation.

Thus, the player who attempts to perform a decisive attack and the other players have a fight for repeatedly pressing buttons. When the player who attempts to perform a decisive attack can have reserved, for a given period of time, a tension gauge sufficient for performing a decisive attack, the "decisive attack" shown in Fig. 9 is performed, and a win is awarded to the player who has performed the decisive attack.

In contrast, if the player who attempts to perform a decisive attack has failed to reserve the tension gauge sufficient for performing a "decisive attack," there is performed an operation for disabling activation of a "decisive attack," thereby significantly decreasing the tension gauge of the player who attempts to perform a decisive attack.

By the foregoing configuration, the game has a battle royal mode in which all characters mixedly fight each other and a man-to-man battle mode in which a character can have a man-to-man battle with a desired opponent. Hence, the players can enjoy a game involving a variety of changes in development of the scene.

When a player desires to fight with a plurality of enemies, the player can have a fight in a battle royal mode. However, if the player desires to have hot competition with a specific enemy at any cost, the player can have a fight with the specific enemy in a man-to-man battle mode. Hence, a variety of fighting modes are available, thereby enabling sufficient reflection of the player's intention in a game.

When a win is awarded to a player in a man-to-man battle mode, a character assigned to the winner is allowed to use a "decisive spell." Use of the decisive spell enables enhancement of attacking prowess such as attacking and physical strength of the character. Hence, the player can enjoy development of a game involving a variety of changes in the attacking prowess of the character.

As a result of the character having acquired a tension gauge of predetermined level or higher, the character can use a "decisive attack" by possessing a key item. Since the character can determine a win or loss in a game by performing a "decisive attack," the player has a strong feeling of victory and can be sufficiently intoxicated with a feeling of triumph.

Accordingly, development of the scene in a game involves a lot of changes, and the arbitrary control of battle actions of the character by the player is enhanced, thus enabling fulfillment of a fighting game program by which a player can sufficiently enjoy a feeling of triumph.

The foregoing embodiment has illustrated a fighting game. Needless to say, the fighting game program according to the invention can be effectively applied to other, analogous games.

A computer-readable record medium recording the above-mentioned program is also within the scope of the invention. Further, if the above-mentioned program is implemented by a program of the OS, etc., operating in a computer system, the record medium recording a program containing various instructions for controlling the program of the OS, etc., is also within the scope of the invention.

## Claims

1. A computer program for a fighting game in which a plurality of characters controlled by players are displayed on a display to fight with each other, the program comprising the processing of:
providing a first mode in which at least three characters are displayed on a first screen to fight with each other;
providing a second mode in which two characters are displayed on a second screen to perform a man-to-man battle; and
switching a current mode of the fighting game between the first mode and the second mode.

2. The computer program as set forth in claim 1, wherein a transition between the first screen and the second screen is continuously performed in the switching process.

3. The computer program as set forth in claim 1, further comprising the processing of:
detecting an attack input operation performed by one player who is associated with a first character and intends to deliver an attack to a second character; and
judging whether a distance between the first character and the second character in the first screen is a first distance or less,
wherein the attack input operation is made valid only when it is judged the distance between the first character and the second character is the first distance or less.

4. The computer program as set forth in claim 3, further comprising the processing of displaying gages each associated with one character to indicate a level acquired by the one character.

5. The computer program as set forth in claim 4, wherein the gage is represented by a graph having an area corresponding to the acquired level.

6. The computer program as set forth in claim 4, further comprising the processing of incrementing a gage for the first character when the attack input operation is made valid, while decrementing a gage for the second character.

7. The computer program as set forth in claim 1, further comprising the processing of detecting a mode shift input operation performed by one player who is associated with a first character and intends to conduct a man-to-man battle with a second character,
wherein a transition from the first mode to the second mode is performed by the mode shift input operation.

8. The computer program as set forth in claim 7, further comprising the processing of judging whether a distance between the first character and the second character in the first screen is a second distance of less,
wherein the mode shift input operation is made valid to perform the transition, only when it is judged the distance between the first character and the second character is the second distance or less.

9. The computer program as set forth in claim 8, further comprising the processing of:
displaying, on the second screen, a series of operation instructions to be followed by the players associated with the first character and the second character, as the man-to-man battle; and
judging which player first follows the operation instructions.

10. The computer program as set forth in claim 9, further comprising the processing of:
displaying gages respectively associated with the first character and the second character to indicate a level acquired by the respective character; and
incrementing a gage for a character won the man-to-man battle, while decrementing a gage for a character lost the man-to-man battle.

11. The computer program as set forth in claim 1, further comprising the processing of:
detecting a mode return input operation performed by one player who intends to cancel the second mode; and
detecting whether a first time period has elapsed since the second mode was established,
wherein a transition from the second mode to the first mode is performed at least one of when the mode return input operation is detected and when it is detected the first time period has elapsed.

12. The computer program as set forth in claim 11, further comprising the processing of judging whether a distance between a third character and either the first character or the second character in the first screen is a third distance or less, wherein:
the mode return operation is provided as an interruption attack input operation performed by one player who is associated with a first character and intends to deliver an attack to a second character to cancel the second mode; and
the interruption attack input operation is made valid only when it is judged the distance between the third character and either the first character or the second character is the third distance or less.

13. The computer program as set forth in claim 12, further comprising the processing of displaying an image which defend the first character and the second character from the interruption attack operation.

14. The computer program as set forth in claim 1, further comprising the processing of giving an item for enhancing attack prowess of a character who won the man-to-man battle.

15. The computer program as set forth in claim 14, further comprising the processing of:
detecting an item activation input operation performed by a player who intends to activate the item; and
enhancing the attack prowess of a character associated with the player who activated the item.

16. The computer program as set forth in claim 14, wherein the item is plurally stockable by each character.

17. The computer program as set forth in claim 6, further comprising the processing of:
providing at least one decisive attack item which is competitively possessed by the characters;
judging whether a first character possesses the decisive attack item;
judging whether a gage for the first character reaches a predetermined level; and
enabling the first character to deliver a decisive attack to a second character so that the first character wins against the second character.

18. The computer program as set forth in claim 17, further comprising the processing of displaying the decisive attack item on the first screen.

19. The computer program as set forth in claim 1, wherein the second screen is displayed only on display of players who participate the man-to-man battle, while the first screen is displayed on display of another player.

20. The computer program as set forth in claim 1, wherein at least one of the characters is a computer-controlled character.

21. A computer-readable recording medium in which the computer program as set forth in any one of the claims 1 to 20 is recorded.
